**Europäisches Patentamt**

**European Patent Office**

**Office européen des brevets**

(19)

(11) Veröffentlichungsnummer: **0 075 783**
**B1**

(12) EUROPÄISCHE PATENTSCHRIFT

(45) Veröffentlichungstag der Patentschrift:
14.11.84

(51) Int. Cl.³: **C 01 F 11/04**

(21) Anmeldenummer: **82108489.4**

(22) Anmeldetag: **15.09.82**

(54) **Verfahren zur Herstellung von pulverförmigem Bariumoxid.**

(30) Priorität: **19.09.81 DE 3137382**

(43) Veröffentlichungstag der Anmeldung:
**06.04.83 Patentblatt 83/14**

(45) Bekanntmachung des Hinweises auf die Patenterteilung:
**14.11.84 Patentblatt 84/46**

(84) Benannte Vertragsstaaten:
**BE DE FR GB NL**

(56) Entgegenhaltungen:
**DE - A - 1 792 624**
**DE - C - 269 239**
**US - A - 3 310 381**
**US - A - 3 855 403**

(73) Patentinhaber: **RIEDEL-DE HAEN AKTIENGESELLSCHAFT, Wunstorfer Strasse 40, D-3016 Seelze 1 (DE)**

(72) Erfinder: **Hirschberg, Rudolf, Dr., Schillerstrasse 13, D-3052 Bad Nenndorf (DE)**
Erfinder: **Schönfeld, Bernd, Dr., Pappelweg 6, D-3052 Bad Nenndorf (DE)**

(74) Vertreter: **Meyer-Dulheuer, Karl-Hermann, Dr. et al, HOECHST Aktiengesellschaft Zentrale Patentabteilung Postfach 80 03 20, D-6230 Frankfurt/Main 80 (DE)**

## Beschreibung

Die Erfindung bezieht sich auf ein Verfahren zur Herstellung von pulverförmigem Bariumoxid durch thermische Zersetzung von Bariumperoxid.

Es ist bekannt, dass Bariumperoxid sich thermisch zu Bariumoxid und Sauerstoff zersetzen lässt (vgl. Gmelins, „Handbuch der anorganischen Chemie", 8. Aufl., 1960, Barium Ergänzungsband, System-Nr. 30, S. 298). Die Zersetzungsreaktion kommt je nach Temperatur (640 oder 840° C) und Druck (1 oder 760 Torr) mehr oder weniger weit vor Erreichen des Gleichgewichtszustandes zum Stillstand. Durch Erhöhung der Temperatur und Verringerung des Drucks lässt sich der Anteil der Zersetzungsprodukte vergrössern.

Bariumperoxid dient üblicherweise als Quelle für die Gewinnung von reinem Sauerstoff, wobei die Zersetzung in Gegenwart von Bariumoxid oder in Gegenwart eines Magnesiumoxid/Calciumoxid-Gemisches durchgeführt wird (vgl. US-PS Nrn. 3310381 und 3855403).

Aufgabe der Erfindung ist die Entwicklung eines Verfahrens zur Herstellung von Bariumoxid, bei dem Bariumperoxid als Ausgangsmaterial verwendet wird und in wirtschaftlicher Weise ein peroxidarmes Bariumoxid erhalten wird.

Die Erfindung betrifft ein Verfahren zur Herstellung von pulverförmigem Bariumoxid durch thermische Zersetzung von Bariumoxid, das dadurch gekennzeichnet ist, dass man pulverförmiges Bariumperoxid in der Heizzone eines Drehrohrofens durch Erhitzen auf eine Temperatur von 800 bis 1000° C in granulatförmiges Bariumoxid umwandelt, dieses dann in der Kühlzone des Drehrohrofens auf eine Temperatur von 10 bis 100° C abkühlt und anschliessend zu einem Pulver mit einem durchschnittlichen Partikeldurchmesser von 0,01 bis 0,10 mm mahlt.

Als Ausgangsmaterial für das erfindungsgemässe Verfahren wird handelsübliches pulverförmiges Bariumperoxid verwendet. Als Reaktionsgefäss dient ein Drehrohrofen, der eine Heizzone und eine Kühlzone aufweist. Das Drehrohr des Ofens ist mit einer Neigung von 5 bis 15° angeordnet, und die Drehgeschwindigkeit beträgt 5 bis 20, vorzugsweise 5 bis 10 tr/min.

Die Zersetzung des Bariumperoxids erfolgt in der Heizzone des Drehrohrofens bei einer Temperatur von 800 bis 1000, vorzugsweise 850 bis 950° C. Dabei wird das pulverförmige Bariumperoxid in granulatförmiges Bariumoxid umgewandelt, und es entstehen überraschenderweise keine Anbackungen im Drehrohr. In der Kühlzone wird das Bariumoxid anschliessend auf eine Temperatur von 10 bis 100, vorzugsweise 15 bis 50° C, abgekühlt, und danach wird es in einer Mahlvorrichtung, z.B. einer Schlagkreuzmühle, zu einem Pulver gemahlen, dessen durchschnittlicher Partikeldurchmesser 0,01 bis 0,1, vorzugsweise 0,02 bis 0,08 mm, beträgt. Der Peroxidgehalt des pulverförmigen Bariumoxids liegt bei höchstens 10, vorzugsweise höchstens 5 Gew.-%.

Eine vorteilhafte Ausgestaltung des erfindungsgemässen Verfahrens besteht darin, dass man das Erhitzen des Bariumperoxids in Gegenwart eines Inertgases durchführt. Als Inertgas eignet sich ein Edelgas wie Argon oder insbesondere Stickstoff. Das Inertgas wird vorzugsweise im Gegenstrom durch den Drehrohrofen geleitet.

Das erfindungsgemässhergestellte Bariumoxid dient insbesondere als Additiv für Versiegelungsmassen auf Polysulfidbasis.

Die folgenden Beispiele dienen zur näheren Erläuterung der Erfindung. Prozentangaben beziehen sich auf das Gewicht.

### Beispiel 1

In das Drehrohr eines Drehrohrofens, das einen Innendurchmesser von 29 cm, einen Neigungswinkel von 10° und eine Drehgeschwindigkeit von 7,5 tr/min aufweist, werden stündlich 50 kg Bariumperoxidpulver mit Hilfe einer Schüttelrinne eindosiert. Die Temperatur der 2 m langen Heizzone ist auf 900° C und die Temperatur der ebenfalls 2 m langen Kühlzone auf 20° C eingestellt. Es werden stündlich 45 kg Bariumoxid ausgetragen, das in Form von Kügelchen mit Durchmessern im Bereich von 1 bis 10 mm anfällt. Das Bariumoxid wird dann in einer Kugelmühle gemahlen; man erhält danach ein Pulver, dessen durchschnittlicher Partikeldurchmesser 0,04 mm beträgt. Das Bariumoxid zeigt einen mittleren Peroxidgehalt von 10%.

### Beispiel 2

Beispiel 1 wird wiederholt mit der Massgabe, dass die Temperatur der Heizzone nun 950° C und die der Kühlzone 25° C beträgt. Ferner wird Stickstoff von der Austragsseite durch das Drehrohr geleitet. Das nach dem Mahlen erhaltene Bariumoxidpulver zeigt einen durchschnittlichen Partikeldurchmesser von 0,05 mm; sein mittlerer Peroxidgehalt beträgt 4,5%.

## Patentansprüche

1. Verfahren zur Herstellung von pulverförmigem Bariumoxid durch thermische Zersetzung von Bariumperoxid, dadurch gekennzeichnet, dass man pulverförmiges Bariumperoxid in der Heizzone eines Drehrohrofens durch Erhitzen auf eine Temperatur von 800 bis 1000° C in granulatförmiges Bariumoxid umwandelt, dieses dann in der Kühlzone des Drehrohrofens auf eine Temperatur von 10 bis 100° C abkühlt und anschliessend zu einem Pulver mit einem durchschnittlichen Partikeldurchmesser von 0,01 bis 0,10 mm mahlt.

2. Verfahren nach Anspruch 1, dadurch gekennzeichnet, dass man das Erhitzen des Bariumperoxids in Gegenwart eines Inertgases durchführt.

3. Verfahren nach Anspruch 2, dadurch gekennzeichnet, dass man das Inertgas im Gegenstrom durch den Drehrohrofen leitet.

## Claims

1. Process for the manufacture of pulverulent barium oxide by thermal degradation of barium peroxide, characterized in that pulverulent barium peroxide is converted into granulated barium oxide by heating to a temperature of from 800 to 1,000° C in the heating zone of a rotary kiln, said granulated barium oxide is then cooled to a temperature of from 10 to 100° C in the cooling zone of the rotary kiln and subsequently milled to a powder having an average particle diameter of from 0.01 to 0.10 mm.

2. Process according to Claim 1, characterized in that the heating of the barium peroxide is performed in the presence of an inert gas.

3. Process according to Claim 2, characterized in that the inert gas is passed through the rotary kiln in a counter-current.

**Revendications**

1. Procédé de préparation d'oxyde de baryum pulvérulent par décomposition thermique du peroxyde de baryum, procédé caractérisé en ce qu'on transforme un peroxyde de baryum pulvérulent, en le chauffant à une température de 800 à 1000° C dans la zone chaude d'un four tubulaire rotatif, en un oxyde de baryum sous forme de granulés, puis on refroidit celui-ci à une température de 10 à 100° C dans la zone froide du four tubulaire rotatif, après quoi on le réduit par broyage en une poudre ayant un diamètre moyen des particules de 0,01 à 0,10 mm.

2. Procédé selon la revendication 1, caractérisé en ce qu'on effectue le chauffage du peroxyde de baryum en présence d'un gaz inerte.

3. Procédé selon la revendication 2, caractérisé en ce qu'on fait passer le gaz inerte à contre-courant dans le four tubulaire rotatif.